# EUROPÄISCHE PATENTSCHRIFT

(11) **EP 1 120 918 B1**
(45) Veröffentlichungstag und Bekanntmachung des Hinweises auf die Patenterteilung: **15.03.2006**
(21) Anmeldenummer: 00204531.8
(22) Anmeldetag: 14.12.2000
(51) Int. Cl.: H04B 1/16, H04M 1/72

(54) **Stromsparschaltung mittels bertriebszustandsabhängiger Ansteuerung einer Anzeigevorrichtung eines Endgerätes für Mobile Kommunikation**
Power saving circuit in mobile terminal with control of the display dependent on the state of operation
Circuit d'économie d'énergie dans un terminal mobile en controlant l'affichage dépendant de l'état de fonctionnement

(30) Priorität: 23.12.1999 DE 19962282
(43) Veröffentlichungstag der Anmeldung: 01.08.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Bauer, Harald, Philips Corporate I. P. GmbH, 52064 Aachen (DE)
(74) Vertreter: Volmer, Georg

(56) Entgegenhaltungen:
- EP-A- 0 936 793
- WO-A-99/40561
- CN-A- 1 170 186
- GB-A- 2 316 837
- PATENT ABSTRACTS OF JAPAN vol. 1998, no. 12, 31. Oktober 1998 (1998-10-31) & JP 10 190786 A (NIPPON DENKI IDO TSUSHIN KK), 21. Juli 1998 (1998-07-21)
- PATENT ABSTRACTS OF JAPAN vol. 1998, no. 05, 30. April 1998 (1998-04-30) & JP 10 013888 A (MATSUSHITA ELECTRIC IND CO LTD), 16. Januar 1998 (1998-01-16)

## Beschreibung

Die Erfindung betrifft ein Endgerät für Mobile Kommunikation, beispielsweise ein sogenanntes "Handy" oder auch ein schnurloses Telefon. Bei diesen Geräten werden durch Auswertung von Betriebszuständen verschiedene Stromsparmodi aktiviert, die die sogenannte Standzeit des meist mit einer wiederaufladbaren Stromquelle betriebenen Gerätes zu verlängern. Aus diesem Grund sind diese Geräte auch meist mit einer Flüssigkristallanzeige ausgestattet, die einen sehr geringen Strombedarf hat.

Aus der EP 0 974 952 A1 ist eine Vorrichtung bekannt bei der ein Display in zwei Bereiche unterteilt ist, die unabhängig voneinander abschaltbar sind, wobei ein Controller die Steuerung des Displays übernimmt, wann ein Teil des Displays aktiviert und angezeigt wird und wann nicht.

Die GB 2 316 837 A zeigt ein Mobilfunkgerät mit einer Anzeigevorrichtung und mehreren LEDs zur Beleuchtung des Tastaturfelds. Weiter ist ein Display angeordnet. Es ist ein Ohrsensor vorgesehen, der die Position des Mobilfunkgeräts am Ohr eines Benutzers erfasst. Weiter ist ein Griffschalter an den Seitenflächen des Mobilfunkgeräts angeordnet Aus den Zuständen des Griffschalters und des Ohrsensors wird die Position des Mobilfunkgeräts zu abgeleitet. In Abhängigkeit der Position wird das Display abgeschaltet.

Aufgabe der Erfindung ist es, bei einem gattungsgemäßen Gerät den Stromverbrauch zu reduzieren.

Diese Aufgabe wird mit den Merkmalen im Kennzeichenteil des Anspruchs 1 gelöst.

Die Abschaltung eines Teils der Anzeigevorrichtung bewirkt überraschenderweise auch bei Flüssigkristallanzeigen eine Reduktion des Stromverbrauchs. Bislang war eine solche Abschaltung wohl für überflüssig gehalten worden, da der Stronnverbrauch der anderen Teile eines Endgerätes auch im Standby-Modus einen weit größeren Energiebedarf hatte. Mit zunehmend effektiveren Maßnahmen zur Reduktion des Energiebedarfs im Standby-Modus wirkt sich nun jedoch auch eine solche Stromsparmaßnahme spürbar auf die Standby-Zeit aus.

Eine vollständige Abschaltung der Anzeigevorrichtung birgt die Gefahr in sich, dass der Benutzer der falschen Meinung erliegt, beim Endgerät wäre die Energiequelle völlig erschöpft. Insofern sind in einer besonderen Ausführungsform alle Teile der Anzeigevorrichtung bis auf den Teil deaktiviert, in welchem der Name und/oder das Logo des Mobilfunknetzbetteibers, bei dem das Endgerät gerade eingebucht ist, angezeigt wird.

Die Auswertung wenn das Endgerät in den Betriebszustand gehen soll, in welchem es die Anzeigevorrichtung teilweise bzw. ganz deaktiviert kann im Prinzip zeitabhängig erfolgen, zum Beispiel durch Messung der Zeit seit dem letzten Betätigen einer Taste. Durch zusätzliche Sensoren wie einen lichtempfindlichen Sensor oder einem bewegungsempfindlichen Sensor beispielsweise kann die Anzeigevorrichtung beispielsweise auch völlig abgeschaltet werden, wenn das Endgerät sich im Dunklen befindet. In diesem Fall ist eine Anzeige völlig unnütz, da ein Benutzer ohne zusätzliche Hintergrundbeleuchtung, die wie allgemein aus dem Stand der Technik bekannt erst durch Drücken einer beliebigen Taste aktiviert werden kann, ohnehin nichts erkennen kann. Durch einen bewegungsabhängigen Sensor kann die Anzeigevorrichtung beispielsweise von einer Teilanzeige wieder auf eine Vollanzeige geschaltet werden. Dies ist beispielsweise dann sinnvoll, wenn ein Endgerät unbeweglich, beispielsweise auf einem Tisch liegt. Durch Berühren des Endgeräts wird dann die vollständige Anzeige wieder ausgelöst.

Die Erfindung wird nun an Hand eines in der Zeichnung dargestellten Ausführungsbeispiels näher beschrieben und erläutert.

Es zeigen:
- Fig. 1: Eine Anzeigevorrichtung bei der alle Anzeigebereiche aktiviert sind
- Fig. 2: Eine Anzeigevorrichtung in einem ersten Stromsparmodus, bei nur noch ein Teil der Anzeigevorrichtung aktiviert ist.
- Fig. 3: Steuervorrichtung eines erfindungsgemäßen Endgeräts

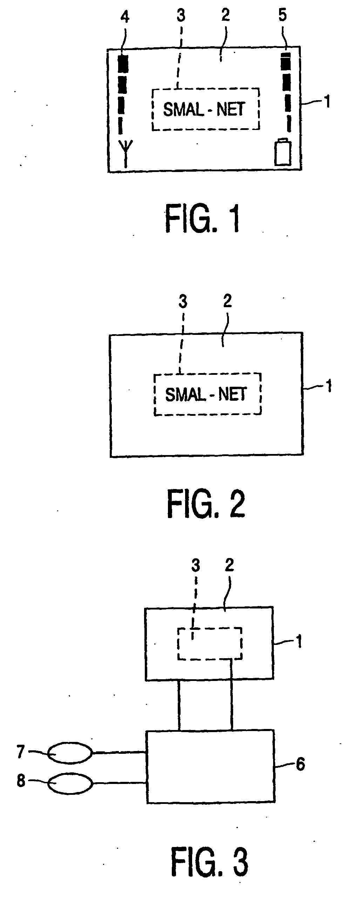

Fig. 3 zeigt eine Steuervorrichtung 6 eines Endgeräts für mobile Kommunikation an der eine Anzeigevorrichtung 1 angeschlossen ist. Mittels Steuerleitungen lassen sich zwei getrennte Bereiche 2, 3 der Anzeigevorrichtung unabhängig voneinander aktivieren. An der Steuervorrichtung 6 sind zwei Sensoren, ein lichtempfindlicher Sensor 7 und ein bewegungsempfindlicher Sensor 8 angeschlossen. Im Grundzustand, zum Beispiel direkt nach dem Einschalten des Endgerätes sind beide Bereiche 2, 3 der Anzeigevorrichtung 1 aktiviert. Figur 1 zeigt eine Anzeigevorrichtung 1 bei der beispielsweise in einem ersten Bereich 2 die Empfangsfeldstärke eines empfangenen Mobilfunksender mittels entsprechender erster Symbole 4 und der Ladezustand des Akkumulators mittels zweiter Symbole 5 angezeigt wird. In einem zweiten Bereich der Anzeigevorrichtung 2 wird der Name 3 des Mobilfunkbetreibers, bei dem das Endgerät gerade eingebucht ist, angezeigt.

Wird das Endgerät, beispielsweise von einer Benutzerin in einer Handtasche verstaut, hat dies einen plötzlichen Lichtabfall in der Umgebung des Endgeräts zur Folge. Durch Auswertung des lichtempfindlichen Sensors 7 erkennt die Steuervorrichtung 6 diesen Betriebszustand und deaktiviert beide Bereiche 2, 3 der Anzeigevorrichtung 1. Auf eine Darstellung der Anzeigevorrichtung in diesem Betriebszustand wurde aus nahe liegenden Gründen verzichtet, da auf der Anzeigevorrichtung nichts zu erkennen wäre.

Wird das Endgerät aus der Handtasche genommen und fällt wieder Licht auf den lichtempfindlichen Sensor 7 so aktiviert die Steuervorrichtung 6 wieder beide Teile der Anzeigevorrichtung. Durch Auswertung des bewegungsempfindlichen Sensors 8 wird nach Ablauf einer bestimmten Zeit die Anzeigevorrichtung teilweise aktiviert. Figur 2 zeigt diesen Betriebszustand, bei dem nur noch der Name des Mobilfunkbetreibers zu erkennen ist. Dieser Betriebszustand ergibt sich beispielsweise wenn das Endgerät auf einem Tisch abgelegt wird.

Wie man sieht, lassen sich durch entsprechende Ausgestaltung und Programmierung der Steuervorrichtung 6 für unterschiedliche Betriebszustände des Endgeräts durch Messung von Zeitablauf und Sensoren beliebige Aktivierungsmöglichkeiten der Anzeigevorrichtung 1 einstellen. So kann - nur um eine weitere Anwendung zu nennen - nicht nur zwischen Umgebungslicht und keinem Umgebungslicht unterschieden werden, sondern auch die Menge des Umgebungslichtes ausgewertet werden, um beispielsweise bei mäßigem Umgebungslicht, wie man dies gelegentlich in Kneipen antreffen soll, auf eine Teilanzeige umzuschalten.

## Patentansprüche

1. Endgerät für mobile Kommunikation mit einer Anzeigevorrichtung (1) und einer Steuervorrichtung (6), die dazu vorgesehen ist, in Abhängigkeit von einem jeweiligen Betriebszustand zumindest einen Teil der Anzeigevorrichtung (1) abzuschalten,
**dadurch gekennzeichnet, dass** ein bewegungsempnndlicher Sensor (8) angeordnet und mit der Steuervorrichtung (6) verbunden ist, wobei die Steuervorrichtung (6) den Zustand des Sewors (8) in Bezug auf einen zu bestimmenden Betriebszustand auswertet und die Anzeigevorrichtung (1) in Abhängigkeit des Betriebszustands zumindest teilweise abschaltet.

2. Endgerät für mobile Kommunikation nach Anspruch 1,
**dadurch gekennzeichnet, dass** ein lichtempfindlicher Sensor (7) angeordnet ist.

3. Endgerät für mobile Kommunikation nach Anspruch 1 oder 2,
**dadurch gekennzeichnet, dass** in einem Betriebszustand nur noch ein Teil der Anzeigevorrichtung (1) aktiviert ist, indem der Name oder das Logo eines Mobilfunkbetreibers angezeigt wird.

## Claims

1. A terminal for mobile communication which includes a display device (1) and a control device (6) which is provided for switching off at least a part of the display device (1) in dependence on a respective operating state, **characterized in that** a motion-sensitive sensor (8) is included and connected to the control device (6), the control device (6) evaluating the condition of the sensor (8) with respect to an operating state to be determined and at least partly switching off the display device (1) in dependence on the operating state.

2. A terminal for mobile communication as claimed in claim 1, **characterized in that** a light-sensitive sensor (7) is included.

3. A terminal for mobile communication as claimed in claim 1 or 2, **characterized in that** in an operating state only a part of the display device is activated in which the name or the logo of a mobile radio operator is displayed.

## Revendications

1. Terminal pour communication mobile avec un dispositif d'affichage (1) et un dispositif de commande (6) qui est prévu pour désactiver au moins une partie du dispositif d'affichage (1) en fonction d'un état de fonctionnement respectif,
**caractérisé en ce qu'**un capteur (8) sensible au mouvement est disposé et relié au dispositif de commande (6), le dispositif de commande (6) évaluant l'état du capteur (8) par rapport à un état de fonctionnement à déterminer et désactivant, du moins en partie, le dispositif d'affichage (1) en fonction de l'état de fonctionnement.

2. Terminal pour communication mobile selon la revendication 1, **caractérisé en ce qu'**un capteur (7) sensible à la lumière est disposé.

3. Terminal pour communication mobile selon l'une des revendications 1 ou 2, **caractérisé en ce que**, dans un état de fonctionnement, seule une partie du dispositif d'affichage (1) est encore activée, le nom ou le logo d'un exploitant de réseau de radiotéléphonie mobile étant affichés.
